(19) Europäisches Patentamt
European Patent Office
Office européen des brevets

(11) Veröffentlichungsnummer: **0 327 690**
**A2**

(12) # EUROPÄISCHE PATENTANMELDUNG

(21) Anmeldenummer: 88119397.3

(22) Anmeldetag: 22.11.88

(51) Int. Cl.4: C08G 69/00

(30) Priorität: 19.01.88 DE 3801287

(43) Veröffentlichungstag der Anmeldung: 16.08.89 Patentblatt 89/33

(84) Benannte Vertragsstaaten: AT BE CH DE FR GB IT LI NL

(71) Anmelder: HÜLS AKTIENGESELLSCHAFT
Patentabteilung / PB 15 - Postfach 13 20
D-4370 Marl 1(DE)

(72) Erfinder: Finke, Jürgen, Dr.
Am Alten Sportplatz 17 a
D-4370 Marl(DE)
Erfinder: Bartmann, Martin, Dr.
Burgstrasse 35
D-4350 Recklinghausen(DE)
Erfinder: Schmidt, Friedrich-Georg, Dr.
Kriegerweg 32
D-4400 Münster(DE)

(54) **Formmassen, enthaltend imidgruppenhaltige aromatische Polyamide und Verfahren zu ihrer Herstellung.**

(57) Ziel der Erfindung war es, Formmassen auf Basis von aromatischen Polyamiden zur Verfügung zu stellen, die bei Temperaturen unter 350 °C unzersetzt thermoplastisch verarbeitbar sind.

Es wurde gefunden, daß Polyamide, die durch Polykondensation von aromatischen Diaminen der Formel
$H_2N - Ar - X - Ar' - Y - Ar' - X - Ar - NH_2$
mit X, Y = $-SO_2-$ oder -CO-
mit Isophthalsäure bzw. einem Isophthalsäure enthaltendem Säuregemisch und Phthalsäureanhydrid erhältlich sind, wesentlicher Bestandteil solcher Formmassen sein sollten.

Verwendung der Formmassen zur Herstellung von Formteilen, die beispielsweise im Automobilsektor eingesetzt werden.

EP 0 327 690 A2

# Formmassen, enthaltend imidgruppenhaltige aromatische Polyamide und Verfahren zu ihrer Herstellung

Die vorliegende Erfindung betrifft Formmassen, die imidgruppenhaltige, aromatische Polyamide enthalten und sich durch erheblich verbesserte Verarbeitbarkeit auszeichnen, sowie ein Verfahren zu ihrer Herstellung.

Aromatische Polyamide auf Basis von aromatischen Dicarbonsäuren und aromatischen Diaminen der allgemeinen Formel

$$H_2N - Ar - X - Ar' - Y - Ar' - X - Ar - NH_2 \quad (I)$$

zeichnen sich nicht nur durch hohe Temperaturbeständigkeit und gute mechanische Eigenschaften aus; sie sind auch thermoplastisch verarbeitbar (s. Elias/Vohwinkel, "Neue polymere Werkstoffe für die industrielle Anwendung", 2. Folge, Carl Hanser Verlag 1983, Seite 242 f.). Dabei steht X für einen Ethersauerstoff und Y für die Sulfonyl-oder Carbonylgruppe und Ar und Ar' stehen unabhängig voneinander für die p- und m-Phenylengruppe. Die Herstellung dieser Polyamide ist der Literatur zu entnehmen.

Brode et al. beschreiben beispielsweise die Darstellung von 4,4′-/Sulfonylbis(p-phenylenoxy)/dianilin (X = O, Y = $SO_2$) aus p-Aminophenol und 4,4′-Dichlordiphenylsulfon und dessen Kondensation mit aromatischen Säurechloriden wie z. B. Terephthalsäurechlorid, in organischen Lösemitteln zu aromatischen Polyamiden mit Glasübergangstemperaturen (Tg) zwischen 230 und 320 °C (Polymer Prepr. Am. Chem. Soc. Div. Pol. Chem. 15, 761 (1974) und Adv. Chem. Ser. 1975, 142; vgl. CA 84, 5530 sf).

Die DE-OS 35 39 846 offenbart aromatische Polyamide, die durch Polykondensation von aromatischen Diaminen der Formel I mit aromatischen Dicarbonsäuren in Lösemitteln wie z. B. Sulfolan in Gegenwart von Triphenylphosphit oder einer Säure der Formel $H_3PO_n$ mit n = 2, 3, 4 erhalten werden. Die Herstellverfahren, die sich eines organischen Lö semittels bedienen, sind technisch aufwendig, da das Polykondensat durch Zugabe eines sogenannten "Nichtlösemittels" gefällt, abfiltriert, durch Auskochen von Lösemittelresten befreit, getrocknet und verdichtet werden muß, um weiterverarbeitet werden zu können.

Das Verfahren der DE-OS 36 09 011 gestattet demgegenüber die Herstellung dieser Polykondensate in der Schmelze der Ausgangsprodukte, wobei die soeben aufgeführten Nachteile entfallen.

Die Schmelzviskosität dieser aromatischen Polyamide ist allerdings sehr hoch. Dies bedingt, daß bei der Herstellung in der Schmelze und bei der Verarbeitung Temperaturen im Bereich von 350 bis 400 °C erforderlich sind. Unter diesen Bedingungen tritt bereits eine merkliche Zersetzung der Polykondensation ein. Dadurch verschlechtern sich sowohl die Farbe als auch die mechanischen Eigenschaften der hergestellten Formteile.

Es ist bekannt, daß man die Schmelzviskosität hochviskoser Polymerer durch Zusatz von sogenannten Fließverbesserern oder Verarbeitungshilfsmitteln senken kann (vgl. z. B. JP-OS 85/245 666, WO 86/03193, JP-OS 85/252 655, JP-OS 85/255 847, JP-OS 85/255 848.) Nachteilig ist aber, daß die niedermolekularen Zusatzstoffe durch Lösemittel herausgelöst werden und zu Spannungsrißbildung führen. Bei thermischer Belastung werden diese Stoffe "ausgeschwitzt" (Diffusion zur Oberfläche der Formteile) und verändern die mechanischen Eigenschaften des Polymeren.

Es ist bekannt, daß die Schmelzviskosität bei einer bestimmten Temperatur von dem Molekulargewicht abhängig ist. Es sollte daher grundsätzlich möglich sein, durch Regelung des Molekulargewichts Polyamide geringer Schmelzviskosität zu erhalten. Setzt man beispielsweise die Dicarbonsäure oder die Diaminokomponente im Überschuß ein, so erhält man Produkte, deren Molekulargewicht vom Molverhältnis der Ausgangskomponenten abhängig ist. Unter den hohen Verarbeitungstemperaturen ist es allerdings nicht zu vermeiden, daß die vorhandenen reaktiven Endgruppen die Kette spalten oder andere unerwünschte Nebenreaktionen eingehen. Man beobachtet, daß die im Überschuß eingesetzte Komponente abgespalten wird und sich schließlich ein Molverhältnis von 1 : 1 einstellt.

Es ist auch bekannt, spezielle Verbindungen, sogenannte Molekulargewichtsregler, während der Polykondensation einzusetzen. In der japanischen Offenlegungsschrift 86/44 928 werden zu diesem Zweck aromatische Aminocarbonsäuren und Monoamide aromatischer Diamine vorgeschlagen. Für diese Verbindungen gelten die prinzipiell gleichen Vorbehalte, wie sie vorstehend erörtert wurden. Setzt man aromatische Tri-bzw. Tetracarbonsäure als Regler ein, wie in der JP-OS 86/44 929 vorgeschlagen, sind Vernetzungen unvermeindlich.

Es ist grundsätzlich auch bekannt, daß Mischungen von nieder- und hochmolekularen Polyamiden eine verringerte Schmelzviskosität aufweisen. Unterwirft man jedoch derartige Mischungen den üblichen Temperaturen bei der Verarbeitung, so kommt es zu Umamidierungen, wobei leicht flüchtige Bestandteile herausdiffundieren.

So werden in der JP-OS 81/98 260 Mischungen aus aromatischen Polyamiden der allgemeinen Formel
(-NH - Ar - NH - CO - Ar - CO-)
beansprucht, die sich in ihrer Viskosität und infolgedessen auch in ihrer Molmasse unterscheiden. Dem experimentellen Teil ist jedoch nur zu entnehmen, daß 2 unschmelzbare Oligoamide von nahezu gleichem Molekulargewicht gemischt werden.

Aus dem Stand der Technik waren somit keine Formmassen auf Basis von Polyamiden mit der Diaminkomponente gemäß Formel I und bestimter Molmasse bekannt, die unter 350 °C thermoplastisch verarbeitbar sind, ohne daß es zu Zersetzungen kommt.

Aufgabe der vorliegenden Erfindung war es, solche Formmassen zu finden.

Die jetzt gefundenen Polyamide werden durch Polykondensation von aromatischen Diaminen A der allgemeinen Formel
$H_2N$ - Ar - O - Ar' - X - Ar' - O - Ar - $NH_2$
mit Ar, Ar' = m- oder p-Phenlyenrest X = -$SO_2$- oder -CO-
mit einer aromatischen Dicarbonsäure bzw. einem aromatischen Dicarbonsäuregemisch B und einem aromatischen Dicarbonsäureanhydrid C erhalten. Als Säurekomponenten B kommen infrage

B1 Gemische aus 40 bis 100 Mol-% einer Säure der allgemeinen Formel

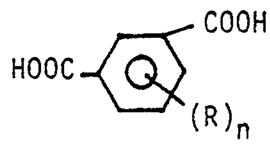

und bis zu 60 Mol-% einer Säure der allgemeinen Formel

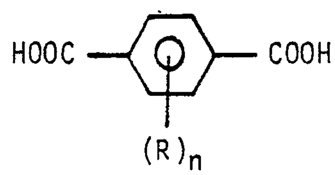

wobei n eine Zahl zwischen 0 und 4 ist und R ein Alkylrest mit 1 -6 C-Atomen, ein gegebenenfalls alkyl- oder arylsubstituierter Phenylrest, ein Alkoxyrest mit 1 - 6 C-Atomen, ein Phenoxyrest oder ein Halogen ist

B2 eine Säure der Formel

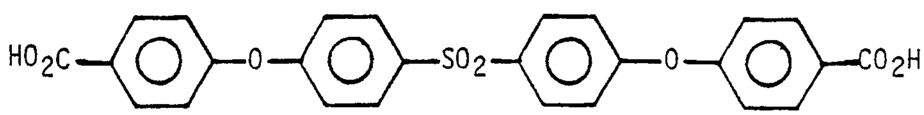

B3 eine Dicarbonsäure der allgemeinen Formel
$HO_2C$ - Ar - $(A - Ar)_p$ - $CO_2H$
mit Ar = m-Phenylen oder p-Phenylen
A = -O-, -S-, -$SO_2$-, -CO-, und
p = 0 oder 1

Das aromatische Dicarbonsäureanhydrid C weist die allgemeine Formel

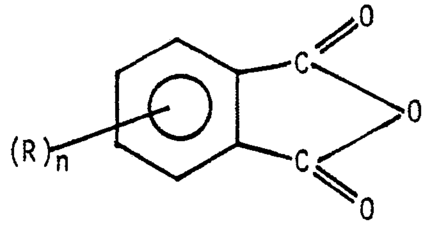

auf, wobei R und n die bereits vorstehend aufgeführten Bedeutungen haben können.

Das aromatische Polyamid enthält, bezogen auf 1 Mol A, 0,9 bis 1,1 Mole B und 0,001 bis 0,2 Mole C.

Als aromatisches Diamin A werden 4,4′-Bis(4-aminphenoxy)diphenylsulfon und 4,4′-Bis(4-aminophenoxy)benzophenon bevorzugt.

Der Parameter n in der Säurekomponente B1 hat vorzugsweise den Wert 0.

Mit den vorliegenden Formmassen werden folgende Vorteile erzielt:

1. Die aromatischen Polyamide weisen eine hohe Temperaturbeständigkeit auf und sind dennoch - aufgrund ihrer erstaunlich niedrigen Schmelzviskosität - leicht verarbeitbar.

2. Unter den Verarbeitungsbedingungen verändert sich die Molmasse der Polyamide nicht.

Es ist überraschend, daß die Umsetzung mit dem Phthalsäureanhydrid nicht nur quantitativ sondern auch irreversibel verläuft.

Zwar war aus einem wissenschaftlichen Artikel (vgl. J. Polym. Sci. 19, 651 (1975) bekannt, daß man gegen Ende der Polymerisation von 4-Chlorformylphthalsäureanhydrid mit 4,4′-Diaminodiphenylether Anilin oder Phthalsäureanhydrid zusetzen kann, aber hiermit wird keine Verbesserung der Polymereigenschaften erreicht. Unter den Reaktionsbedingungen, die die Autoren angeben, findet nämlich keine Cyclodehydratisierung zum Imid statt, und das Phthalsäureanhydrid reagiert lediglich mit einer Carbonsäurefunktion zu einer Amidcarbonsäure. Diese Literaturstelle konnte dem Fachmann um so weniger eine Anregung vermitteln, als offensichtlich keine Polyamide mit stabilem Molekulargewicht erhalten werden.

Im folgenden sollen die Formmassen detailliert beschrieben werden.

Das aromatische Diamin A weist die allgemeine Formel

$H_2N - Ar - O - Ar' - X - Ar' - O - Ar - NH_2$

auf. Hierbei sind Ar und Ar' m- oder vorzugsweise p-Phenylenreste. X steht für die Gruppen -CO- oder vorzugsweise $-SO_2-$.

Als Säurekomponente B kommt eine der nachfolgend erläuterten Komponenten B1, B2 und B3 oder deren Gemisch infrage.

Die Säurekomponente B1 ist eine Isophthalsäure der allgemeinen Formel

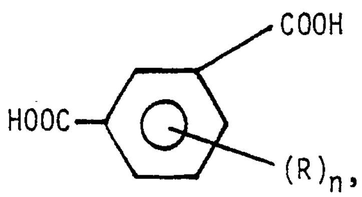

die bis zu 60 Mol-% durch eine Terephthalsäure der allgemeinen Formel

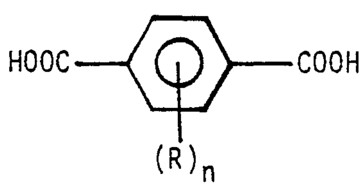

ersetzt werden kann. n ist eine ganze Zahl zwischen 0 und 4, vorzugsweise 0 oder 1. R ist ein Alkylrest mit 1 bis 6 C-Atomen, ein Phenylrest, der alkyl- oder arylsubstituiert sein kann, ein Alkoxyrest mit 1 bis 6 C-Atomen, ein Phenoxyrest, dessen Phenylring alkyl- oder arylsubstituiert sein kann, ein Halogen, insbesondere Chlor und Brom.

Die Säurekomponente B2 ist eine Säure der Formel

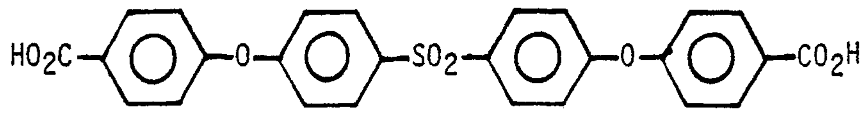

Die Säurekomponente B3 ist eine Säure der Formel
$HO_2C - Ar - (A - Ar)_p - CO_2H$.

Hierbei steht Ar wiederum für den m- oder vorzugsweise den p-Phenylenrest, A ist ein zweiwertiger Rest mit den Bedeutungen -O-, -S-, $-SO_2$-und -CO- und p hat entweder den Wert 0 oder 1.

Wesentlich für die vorliegende Erfindung ist die Komponente C, ein aromatisches Dicarbonsäureanhydrid der allgemeinen Formel

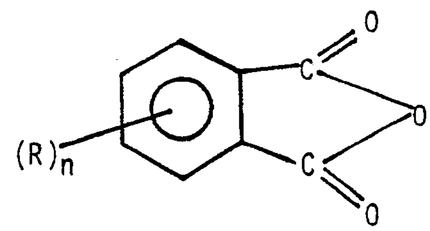

wobei R und n die bereits vorstehend aufgeführten Bedeutungen haben.

Die erfindungsgemäßen Formmassen werden durch Polykondensation der vorstehend aufgeführten Ausgangsverbindungen in Gegenwart eines phosphorhaltigen Katalysators erhalten. Vorzugsweise handelt es sich um Verbindungen des Phosphors der Oxidationsstufe 5 bis 1 wie z. B. Triphenylphosphit oder insbesondere hypophosphorige Säure.

Es empfiehlt sich, eine tertiäre Stickstoffbase zuzusetzen. Besonders bewährt haben sich Dialkylaminopyridine, insbesondere 4-Dimethylaminopyridin.

Die Reaktion wird üblicherweise im Temperaturbereich von 220 bis 350 °C entweder in Lösung oder vorzugsweise in der Schmelze durchgeführt.

Geeignete Lösemittel werden z. B. in der DE-OS 35 39 846 beschrieben. Bevorzugt ist Sulfolan.

Das Verfahren in der Schmelze kann beispielsweise so durchgeführt werden, daß zunächst ein Oligomer batchweise hergestellt wird und anschließend eine Nachkondensation, beispielsweise im Extruder unter Anlegen von Vakuum, durchgeführt wird. Gegebenenfalls können Zusatzstoffe wie Pigmente, UV-Stabilisatoren, Antiooxidantien und Füllstoffe zugesetzt werden.

Die erfindungsgemäßen Formmassen dienen zur Herstellung von Formteilen, die beispielsweise im Automobilsektor eingesetzt werden. Ein weiteres Anwendungsgebiet sind Leiterplatten für gedruckte Schaltungen.

Beispiel 1

60,00 g (0,139 Mol) 4,4′-/Sulfonylbis(p-phenyloxy)/dianilin
22,92 g (0,138 Mol) Isophthalsäure
0,3 g (0,002 Mol) Phthalsäureanhydrid

Die Einsatzprodukte werden mit 0,67 ml 50 prozentiger wäßriger hypophosphoriger Säure und 0,508 g Dimethylaminopyridin 20 Minuten bei 250 °C, 10 Minuten bei 300 °C und 40 Minuten bei 330 °C unter Stickstoff im Polykondensationsreaktor, der mit einem Einleitungssystem für Stickstoff und eine Destillationsbrücke ausgestattet ist, gerührt. Bei der anschließenden Feststoffkondensation des Oligomeren unter einem Druck von 1 mbar steigt die Viskosität nach 2 Stunden bei 200 °C, 2 Stunden bei 230 °C, 2 Stunden bei 250 °C und 3 Stunden bei 280 °C von $Eta_{red}$ = 0,44 $cm^3/g$ auf 1,09 $cm^3/g$ (Phenol/o-Dichlorbenzol 1 : 1).

Beispiel 2

42,25 g (0,10 Mol) 4,4′-Bis-(4-aminophenoxy)diphenylsulfon
23,24 g (0,09 Mol) Phenoxyterephthalsäure
1,49 g (0,09 Mol) Terephthalsäure
0,30 g (0,002 Mol) Phthalsäureanhydrid
100 µl 50 prozentige wäßrige hypophosphorige Säure
122 mg Dimethylaminopyridin

Die Einsatzprodukte werden bei 300 °C im Polykondensationsreaktor aufgeschmolzen. Nach wenigen Minuten bildet sich Reaktionswasser, das im Verlaufe der Reaktion kontinuierlich abdestilliert wird. Nach 20 Minuten wird die Temperatur auf 320 °C erhöht und 20 Minuten bei dieser Temperatur gehalten. Das goldbraune Reaktionsprodukt weist eine Viskositätszahl J von 40 $cm^3/g$ auf. Das Produkt wird 13 Stunden in fester Phase nachkondensiert, wobei die Temperatur stufenweise von 200 auf 260 °C erhöht wird. Der J-Wert beträgt nunmehr 63 $cm^3/g$. Das DSC-Diagramm zeigt eine Glastemperatur von 220 °C an.

Beispiel 3

20,02 g (0,10 Mol) 4,4′-Diaminodiphenylether (siehe Formel!)
23,24 g (0,09 Mol) Phenoxyterephthalsäure
1,49 g (0,09 Mol) Isophthalsäure
0,30 g (0,02 Mol) Phthalsäureanhydrid
272 µl 50 prozentige wäßrige hypophosphorige Säure
305 mg Dimethylaminopyridin

Die Einsatzprodukte werden in 150 ml Sulfolan 2 Stunden auf 230 °C und 4 Stunden auf 250 °C erhitzt. Das im Verlauf der Reaktion gebildete Wasser wird kontinuierlich abdestilliert. Die erkaltete Reaktionslösung wird mit 300 ml N-Methylpyrrolidon verdünnt und unter kräftigen Rühren in 2 000 ml eines Gemisches aus Methanol und Wasser im Verhältnis 8 : 2 gegossen. Das farblose Produkt wird abgesaugt und mit Methanol gewaschen. Man erhält 42,7 g eines Polyamids mit einem J-Wert von 126 $cm^3/g$ (gemessen in konz. $H_2SO_4$).

Beispiel 4

43,25 g (0,10 Mol) 4,4′-Bis-(4-aminophenoxy)diphenylsulfon
12,88 g (0,499 Mol) Phenoxyterephtahlsäure
0,07 g (0,0005 Mol) Phthalsäureanhydrid
272 µl 50 prozentige wäßrige hypophosphorige Säure
305 ml Dimethylaminopyridin

Die Einsatzprodukte werden analog zu Beispiel 3 umgesetzt. Man erhält 60,5 eines Polyamids mit einem J-Wert von 71 $cm^3/g$ (gemessen in konz. $H_2SO_4$).

Beispiel 5

865 g (2,00 Mol) 4,4′-Bis-(4-aminophenoxy)diphenylsulfon
328,94 g (1,98 Mol) Isophthalsäure
5,93 g (0,04 Mol) Phthalsäureanhydrid
1,09 ml 50 prozentige wäßrige hypophosphorige Säure
1,22 g Dimethylaminopyrridin

Die Einsatzprodukte werden im Polykondensationsreaktor bei 250 °C aufgeschmolzen und 1 Stunde bei 250 °C gerührt. Im Verlauf von 10 Minuten wird die Temperatur auf 300 °C erhöht, nach weiteren 10 Minuten schließlich auf 350 °C und 10 Minuten bei dieser Temperatur gehalten. Das erhaltene Produkt weist einen J-Wert von 28 $cm^3/g$ auf (gemessen im Gemisch aus Phenol und 1,2-Dichlorphenol im

Verhältnis 1 : 1). Die anschließende 17-stündige Festphasennachkondensation bei 260 °C liefert ein Produkt mit einem J-Wert von 80 $cm^3/g$ in einem Gemisch aus Phenol und 1,2-Dichlorbenzol. Der MVI-Wert (melt-viscosity index) bei 340 °C beträgt bei einem Druck von 21,6 kg 2,73 g/10 min.

<u>Beispiel 6</u>

64,87 g (0,15 Mol) 4,4'-Bis-(4-aminophenoxy)diphenylsulfon
23,05 g (0,13875 Mol) Isophthalsäure
3,33 g (0,0225 Mol) Phthalsäureanhydrid
109 µl 50 prozentige wäßrige hypophosphorige Säure
122 mg Dimethylaminopyridin

Die Einsatzprodukte werden im Polykondensationsrohr bei 250 °C aufgeschmolzen, 20 Minuten gerührt und anschließend 10 Minuten bei 300 °C und 20 Minuten bei 320 °C kondensiert. Der J-Wert des Produktes beträgt 27 $cm^3/g$ (gemessen in Gemisch aus Phenol und 1,2-Dichlorbenzol im Verhältnis 1 : 1). Nach 17 stündiger Festphasennachkondensation bei 240 °C beträgt der J-Wert 33 $cm^3/g$.

<u>Beispiel 7</u>

Eine Mischung aus 100 Gewichtsteilen des nach Beispiel 5 hergestellten Polyamids und 2 Gewichtsteilen des nach Beispiel 6 hergestellten Polyamids weist einen MVI-Wert von 3,76 $cm^3/10$ min bei 340 °C unter einem Druck von 21,6 kg auf.

<u>Beispiel 8</u>

Eine Mischung aus 100 Gewichtsteilen des nach Beispiel 5 hergestellten Polyamids und 5 Gewichtsteilen des nach Beispiel 6 hergestellten Polyamids weist einen MVI-Wert von 4,94 $cm^3/10$ min bei 340 °C unter einem Druck von 21,6 kg auf.

**Ansprüche**

1. Formmassen, enthaltend imidgruppenhaltige aromatische Polyamide, erhältlich durch Polykondensation von

A aromatischen Diaminen der allgemeinen Formel

$H_2N - Ar - O - Ar' - X - Ar' - Ar - NH_2$

mit Ar, Ar' = m- oder p-Phenlyenrest

X = $-SO_2-$ oder -CO-

mit einer aromatischen Dicarbonsäure bzw. einem aromatischen Dicarbonsäuregemisch aus folgenden Säurekomponenten

B1 Gemische aus 40 bis 100 Mol-% einer Säure der allgemeinen Formel

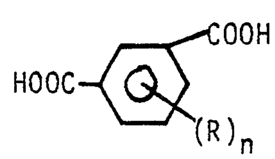

- 60 bis 0 Mol-% einer Säure der allgemeinen Formel

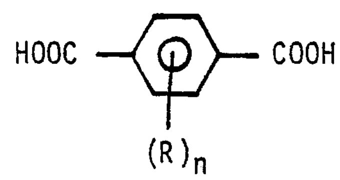

wobei n eine Zahl zwischen 0 und 4 ist und R folgende Bedeutung hat
a) Alkylrest mit 1 - 6 C-Atomen
b) gegebenenfalls alkyl- oder arylsubstituierter Phenylrest
c) Alkoxyrest mit 1 - 6 C-Atomen
d) Phenoxyrest, wobei der Phenylring wiederum alkyl- oder arylsubstituiert sein kann
e) Halogen, insbesondere Chlor und Brom,
B2 eine Säure der Formel

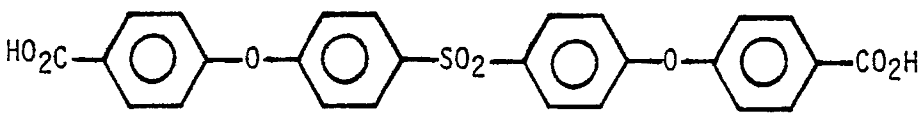

oder
B3 eine Dicarbonsäure der allgemeinen Formel
$HO_2C - Ar - (A - Ar)_p - CO_2H$
mit Ar = m-Phenylen oder p-Phenylen
A = -O-, -S-, $-SO_2-$, -CO-, und
p = 0 oder 1
und
C einem aromatischen Dicarbonsäureanhydrid der allgemeinen Formel

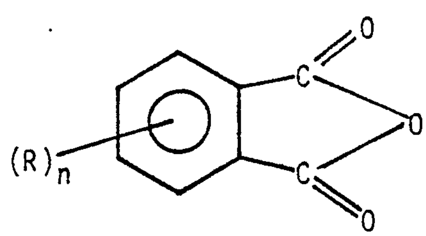

wobei R und n die bereits vorstehend aufgeführten Bedeutungen haben können.

2. Formmassen nach Anspruch 1,
dadurch gekennzeichnet,
daß das aromatische Polyamid, bezogen auf 1 Mol A,
0,9 bis 1,1 Mole B und
0,001 bis 0,2 Mole C enthält.

3. Formmassen nach den Ansprüchen 1 und 2,
dadurch gekennzeichnet,
daß man als aromatisches Diamin 4,4′-Bis(4-aminphenoxy)diphenylsulfon einsetzt.

4. Formmassen nach den Ansprüchen 1 und 2,
dadurch gekennzeichnet,
daß man als aromatisches Diamin 4,4′-Bis(4-aminophenoxy)benzophonon einsetzt.

5. Formmassen nach den Ansprüchen 1 bis 4,
dadurch gekennzeichnet,
daß n den Wert 0 hat.

6. Formmassen nach den Ansprüchen 1 bis 5,
dadurch gekennzeichnet, daß als Säurekomponente B ausschließlich Isophthalsäure eingesetzt wird.

7. Formmassen nach den Ansprüchen 1 bis 6,
dadurch gekennzeichnet,
daß das Polyamid, bezogen auf 1 Mol A
0,9 bis 0,999 Mole B und entsprechend
0,2 bis 0,002 Mole C enthält, sodaß die Zahl der miteinander reaktionsfähigen basischen und sauren Gruppen gleich ist.

8. Formmassen, enthaltend zwei aromatische Polyamide gemäß Anspruch 7, wobei das erste Polyamid 0,002 bis 0,1 Mole C und das zweite Polyamid 0,1 bis 0,2 Mole C enthält.

9. Formmassen gemäß Anspruch 8,
dadurch gekennzeichnet,
daß, bezogen auf die Mischung der beiden Polyamide, der Gewichtsanteil des ersten Polyamids 50 bis 99,5 % und der des zweiten Polyamids 50 bis 0,5 % beträgt.

10. Verfahren zur Herstellung der Formmassen nach den Anspruch 1,
dadurch gekennzeichnet,
daß man aromatische Polyamide durch Polykondensation der aromatischen Diamine A mit einer aromatischen Dicarbonsäurekomponente B und einem aromatischen Dicarbonsäureanhydrid C herstellt und gegebenenfalls weitere Zusatzstoffe wie Pigmente, UV-Stabilisatoren, Antioxidantien und Füllstoffe zusetzt.